# EUROPEAN PATENT SPECIFICATION

(11) **EP 0 372 936 B1**
(45) Date of publication and mention of the grant of the patent: **27.10.1993**
(21) Application number: 89312728.2
(22) Date of filing: 06.12.1989
(51) Int. Cl.: H02G 15/08, H02G 15/10

(54) **Cable jointing**
Kabelverbindung
Jonction de câbles

(30) Priority: 09.12.1988 GB 8828784
(43) Date of publication of application: 13.06.1990
(73) Proprietor: BOWTHORPE-HELLERMANN LIMITED, Crawley West Sussex RH10 2RZ (GB)
(72) Inventor: Gregory, Nigel James, Liskeard, Cornwall, PL 14 3SQ (GB); Isaac, Paul Robert, Crownhill, Plymouth, Devon PL6 5QN (GB)
(74) Representative: Gibson, Stewart Harry

(56) References cited:
- EP-A- 0 153 174
- US-A- 4 693 767

## Description

This invention relates to a method and component for jointing electrical cables, particularly power cables in the voltage range of 3 to 33KV. These known techniques for jointing power cables in the voltage range of 3 to 33KV include encapsulating the joint in resin, filling a joint box with bitumen, and applying heat-shrink sleeves. The application of heat-shrink sleeves is a fast way of insulating a joint and requires relatively little skill, but many jointers are unfavourably disposed to heat-shrink techniques because the joint is not filled and therefore in the event of water ingress it is liable eventually to fail.

In a recent development of the heat-shrink jointing technique, an elongate core separator is used, having three longitudinally - extending recesses spaced apart around its circumference. The three cable cores are jointed and then individually insulated using heat-shrink tubes to restore the core insulation, and if necessary the core screening layer. The cores are then laid in the respective longitudinal recesses of the core separator, with each core surrounded by longitudinally - applied strips of mastic material. An outer heat-shrink sleeve is applied around the whole three-core assembly, and when this outer sleeve is heated to recover about the joint, the heat serves to melt the mastic and cause it to flow so as to encapsulate the joint. It is however time-consuming to apply the strips of mastic to the individual cores.

US 4 693 767 discloses a cable joint in which a hot melt adhesive core separator is disposed between the cores of the cable. An outer heat shrinkable sleeve is applied over the joint and the joint is subsequently heated to recover the sleeve and melt the core separator.

We have now devised a method of jointing cables which provides encapsulation of the joint yet is a quick and straightforward method to carry out.

In accordance with this invention there is provided a method of forming a cable joint between multi-cored cables comprising inserting an elongate separator between the jointed cores, the separator comprising arms which project outwards between adjacent cores, and applying an outer heat-shrink sleeve, the arms being of thermoplastic material so as to melt in response to heat applied to effect recovery of the sleeve characterised in that the arms of the separator project outwardly substantially beyond the outer periphery of the assembly of the cable-cores and in that the arms are deformed by wrapping them around the cores before the heat-shrink sleeve is applied, so that the arms melt and flow to encapsulate the joint in response to the heat which is applied to cause recovery of the sleeve.

An embodiment of this invention will now be described by way of example only and with reference to the accompanying drawings, in which:
FIGURE 1 is a section through a prior art core separator;
FIGURE 2 is a section through a cable joint using the prior art core separator and strips of mastic;
FIGURE 3 is a section through a core separator in accordance with this invention; and
FIGURE 4 is a section through a cable joint using the core separator of Figure 3.

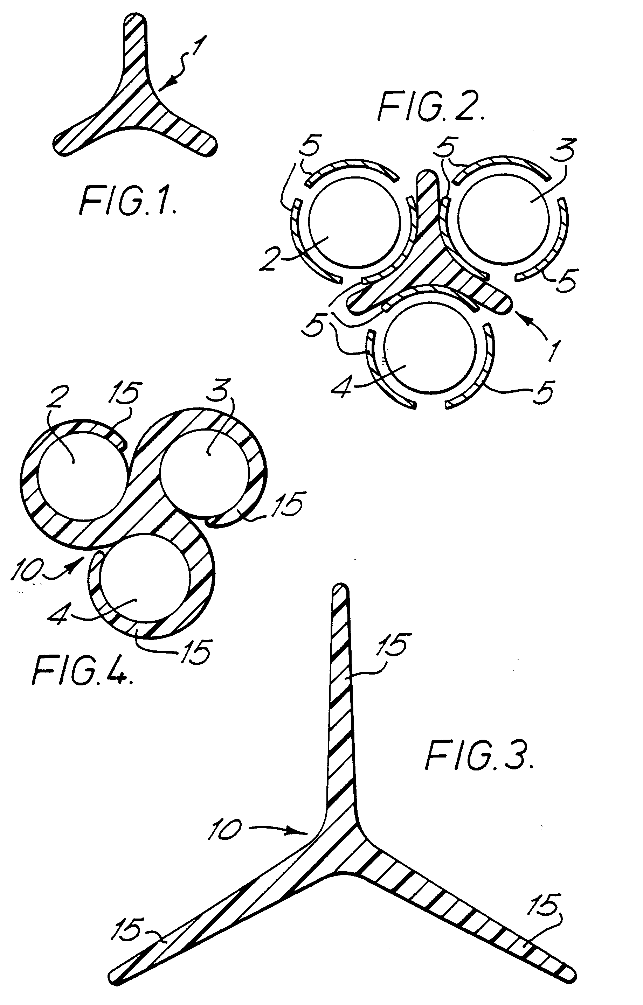

Referring to Figures 1 and 2, in the prior art jointing method, an elongate core separator 1 of solid, rigid insulating construction is disposed between the jointed cores 2, 3, 4 of three-core cables. The separator has three short, outwardly extending arms providing recesses between them for receiving the respective cores. The individual cores are re-insulated using heat-shrink tubes and then strips 5 of mastic material are applied longitudinally to the cores. An outer heat-shrink sleeve (not shown) is then recovered around the assembly, and heat from this process melts the mastic, causing this to flow and encapsulate the three cores 2, 3, 4.

Referring to Figure 3, in accordance with this invention an elongate core separator 10 is used, which is formed of thermoplastic material and has three radially projecting arms 15 which are deformable. The core separator 10 is semi-crosslinked. In use, the cable cores 2, 3, 4 (once jointed togethere and reinsulated with individual heat shrink tubes) are laid in the recesses between the arms 15 of the core separator 10. The arms 15 project outwardly substantially beyond the outer periphery of the assembly of three cores, and are then deformed by hand to wrap them around the respective cores, as shown in Figure 4.

An outer heat-shrink sleeve is then recovered around the assembly and heat from the recoverry process melts or partially melts the wrapped-around arms 15 of the separator. Material from these arms flows so as to encapsulate the cores completely underneath the recovered outer sleeve.

It will be appreciated that the core separator is quick and straightforward to insert between the cores and wrap about them, and its arms will melt and flow to encapsulate the cores upon recovery of the outer sleeve.

## Claims

1. A method of forming a cable joint between multi-cored cables comprising inserting an elongate separator (10) between the jointed cores (2-4), the separator (10) comprising arms (15) which project outwards between adjacent cores, and applying an outer heat-shrink sleeve, the arms (15) being of thermoplastic material so as to melt in response to heat applied to effect recovery of the sleeve characterised in that the arms (15) of the separator project outwardly substantially beyond the outer periphery of the assembly of the cable-cores (2-4) and in that the arms (15) are deformed by wrapping them around the cores (2-4) before the heat-shrink sleeve is applied, so that the arms (15) melt and flow to encapsulate the joint in response to the heat which is applied to cause recovery of the sleeve.

## Patentansprüche

1. Ein Verfahren zum Bilden einer Kabelverbindung zwischen mehradrigen Kabeln, das das Einfügen einer länglichen Trennvorrichtung (10) zwischen den verbundenen Adern (2-4) und das Aufbringen einer äußeren Heißschrumpfmuffe umfaßt, wobei die Trennvorrichtung (10) zwischen benachbart liegenden Adern nach außen ragende Arme (15) aufweist und die Arme (15) derart aus thermoplastischem Material gefertigt sind, daß sie unter der zur Rückverformung der Muffe aufgebrachten Wärme schmelzen, dadurch gekennzeichnet, daß die Arme (15) der Trennvorrichtung nach außen wesentlich über den äußeren Umfang der Anordnung der Kabeladern (2-4) hinausragen und daß die Arme (15) durch Wickeln derselben um die Adern (2-4) vor dem Aufbringen der Heißschrumpfmuffe verformt werden, so daß die Arme (15) unter der zur Rückverformung der Muffe zugeführten Wärme schmelzen und zur Verkapselung der Verbindung zerfließen.

## Revendications

1. Procédé de formage d'un joint de câble entre des câbles multiconducteurs comprenant l'insertion d'un séparateur allongé (10) entre les conducteurs joints (2 à 4), le séparateur (10) comprenant des bras (15) qui se projettent vers l'extérieur entre les conducteurs adjacents, et l'application d'une gaine extérieure thermorétractable, les bras (15) étant réalisés en matériau thermoplastique de façon à fondre en réponse à la chaleur appliquée pour réaliser le recouvrement de la gaine, caractérisé en ce que les bras (15) du séparateur se projettent vers l'extérieur substantiellement au-delà de la périphérie extérieure de l'ensemble des conducteurs de câble (2 à 4) et en ce que les bras (15) sont déformés en étant enroulés autour des conducteurs (2 à 4) avant que la gaine thermorétractable soit appliquée, de façon que les bras (15) fondent et s'écoulent pour encapsuler le joint en réaction à la chaleur qui est appliquée pour provoquer le recouvrement de la gaine.
